**Europäisches Patentamt**

**European Patent Office**

**Office européen des brevets**

(19)

(11) **EP 0 689 319 B1**

(12) **FASCICULE DE BREVET EUROPEEN**

(45) Date de publication et mention
de la délivrance du brevet:
**07.08.2002 Bulletin 2002/32**

(51) Int Cl.⁷: **H04L 12/56**, H04Q 11/04

(21) Numéro de dépôt: **95401426.2**

(22) Date de dépôt: **16.06.1995**

(54) **Dispositif d'acheminement de cellules de données ATM**

Wegesucheapparat für ATM-Zellen

Routing apparatus for ATM-cells

(84) Etats contractants désignés:
**DE ES GB IT SE**

(30) Priorité: **20.06.1994 FR 9407526**

(43) Date de publication de la demande:
**27.12.1995 Bulletin 1995/52**

(73) Titulaire: **Ericsson France**
**91300 Massy (FR)**

(72) Inventeur: **Minc, Charles**
**F-75017 Paris (FR)**

(74) Mandataire: **Loisel, Bertrand et al**
**Cabinet Plasseraud,**
**84, rue d'Amsterdam**
**75440 Paris Cédex 09 (FR)**

(56) Documents cités:
**EP-A- 0 549 122          FR-A- 2 678 794**

## Description

La présente invention concerne le domaine des communications à mode de transfert asynchrone (ATM). Elle concerne plus particulièrement l'utilisation de réseaux de type Oméga inversé dans des commutateurs de paquets (ou cellules) de données binaires de type ATM. Les techniques ATM sont envisagées pour les réseaux à intégration de services à large bande, les données portées par les cellules pouvant représenter des données audio, vidéo, des données informatiques ou autres.

Par "bits d'informations des cellules" ou entend ici aussi bien les bits représentant les informations utilisateur, que ceux représentant les informations réseau (en-têtes des cellules ATM).

Un réseau Oméga inversé à $2^N$ entrées et L étages ($L \leq N$) est constitué par une matrice de $2^{N-1}$ lignes et L colonnes d'éléments binaires de commutation, à deux entrées et deux sorties, interconnectés selon la loi suivante (en supposant les entrées et sorties de chaque colonne numérotées de i=0 à i=$2^N$-1 du bas vers le haut de la colonne) :

- les $2^N$ entrées de la colonne 0 constituent les $2^N$ entrées ordonnées du réseau ;
- la sortie i de la colonne j-1 est reliée à l'entrée Rrot (i) de la colonne j, pour $0 \leq i \leq 2^N$-1 et $1 \leq j \leq$ L-1 ;
- la sortie i de la colonne L-1 constitue la sortie Rrot (i) du réseau, pour $0 \leq i \leq 2^N$-1 ;

i étant compris entre 0 et $2^N$-1 est représenté par N bits en base 2, et la notation Rrot(i) utilisée ci-dessus désigne le nombre compris entre 0 et $2^N$-1 dont la représentation binaire correspond aux N bits représentant i, soumis à une permutation circulaire d'une position vers la droite. Par exemple avec N=5 et i=25=$[11001]_2$, on a Rrot(i)=$[11100]_2$=28. Chaque étage du réseau Oméga inversé est constitué par une colonne de $2^{N-1}$ éléments binaires de commutation et par le maillage d'interconnexion situé en aval vers la colonne suivante.

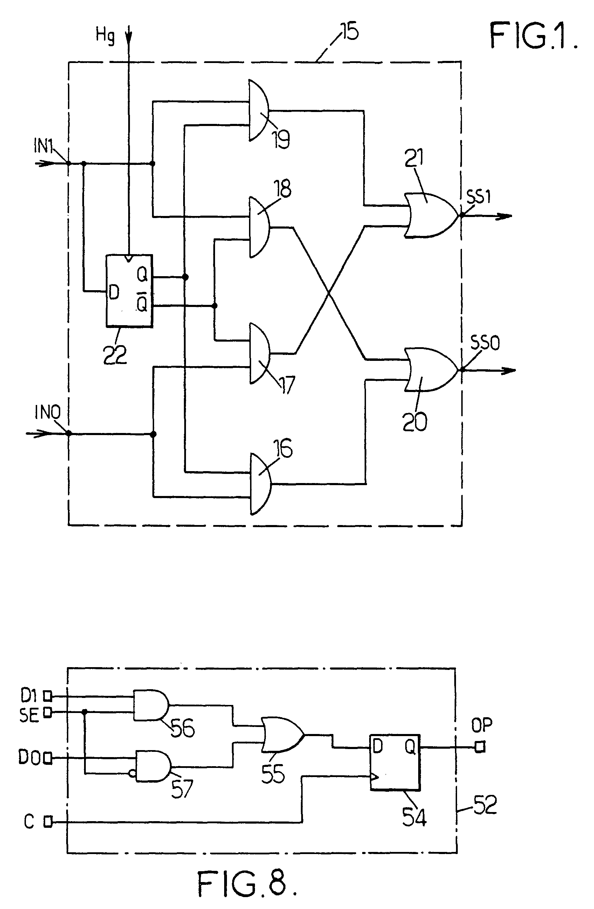

L'élément binaire de commutation 15 est par exemple conforme au schéma de la figure 1. Les entrées inférieure IN0 et supérieure IN1 sont chacune reliées à une entrée de deux portes ET respectives 16,17 et 18,19. Une porte OU 20 a deux entrées respectivement reliées aux sorties des portes ET 16 et 18 et une sortie constituant la sortie inférieure SS0 de l'élément 15. Une porte OU 21 a deux entrées respectivement reliées aux sorties des portes ET 17 et 19, et une sortie constituant la sortie supérieure SS1 de l'élément 15. L'élément 15 comporte en outre une bascule D 22 cadencée par un signal Hg, dont l'entrée D est reliée à l'entrée supérieure IN1 de l'élément 15. Les secondes entrées des portes ET 16 et 19 sont chacune reliées à la sortie Q de la bascule 22, et les secondes entrées des portes ET 17 et 18 sont chacune reliées à la sortie inversée $\overline{Q}$ de la bascule 22.

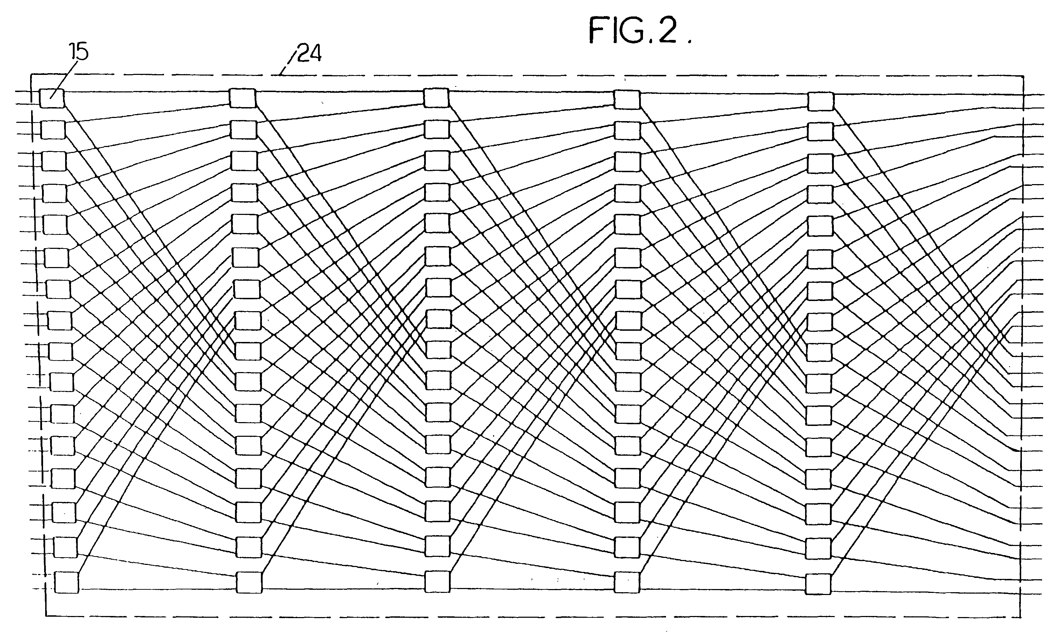

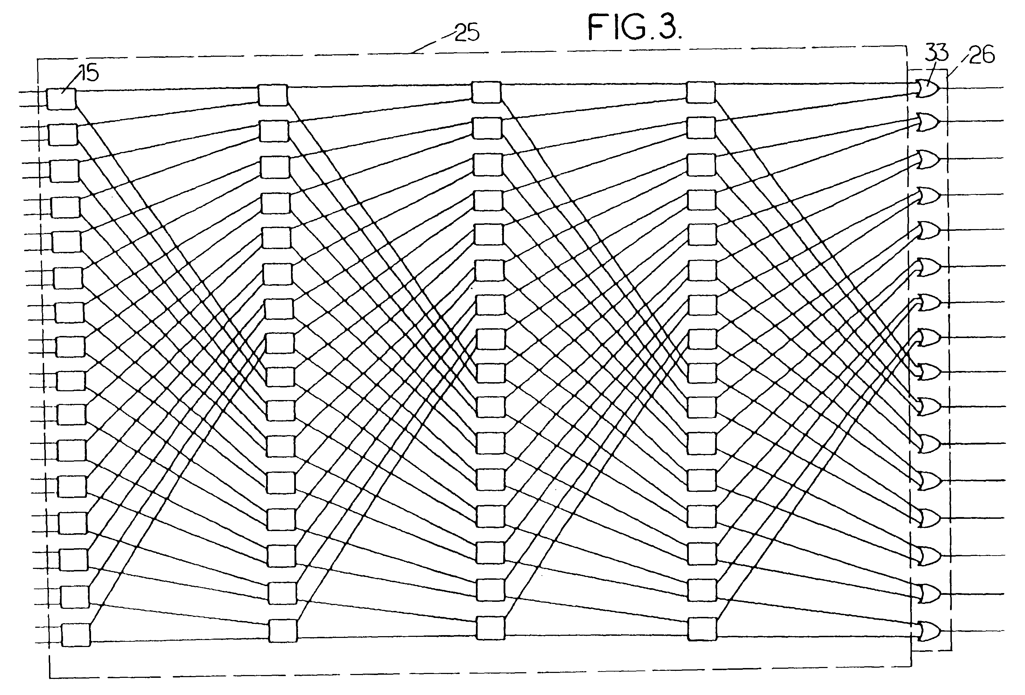

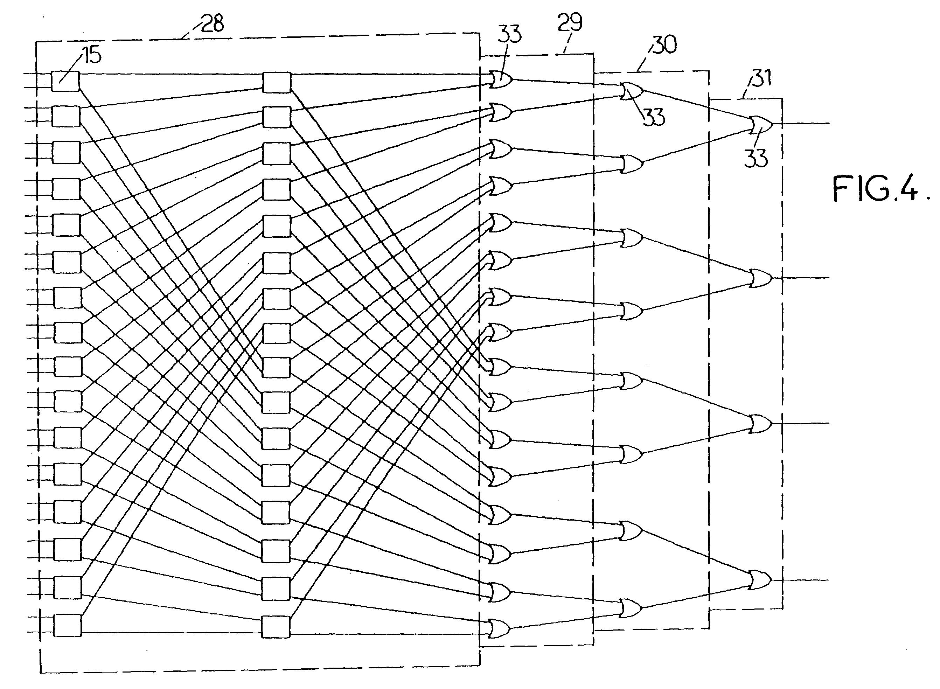

A titre d'exemple, la figure 2 montre un réseau de commutation constitué par un réseau Oméga inversé 24 à 32 entrées et 5 étages (N=L=5) composé d'éléments binaires de commutation 15 du type illustré sur la figure 1. La figure 3 montre un réseau de commutation comprenant un réseau Oméga inversé 25 à 32 entrées et 4 étages (N=5,L=4) complété par un étage de concentration 26. La figure 4 montre un réseau de commutation comprenant un réseau Oméga inversé 28 à 32 entrées et 2 étages (N=5,L=2) complété par trois étages de concentration successifs 29,30 et 31. Dans les réseaux des figures 3 et 4, où il y a N-L étages de concentration successifs ayant chacun un rapport de concentration de 2/1 (de sorte que le réseau global est à $2^N$ entrées et $2^L$ sorties), le k-ième étage de concentration se compose de $2^{N-k}$ portes OU 33 agencées en colonne. Chaque porte OU 33 a deux entrées respectivement reliées à deux sorties consécutives de l'étage précédent (étage de concentration ou dernier étage du réseau Oméga inversé). En d'autres termes, la sortie i du k-ième étage de concentration ($1 \leq k \leq$ N-L et $0 \leq i \leq 2^{N-k}$ - 1) est fournie par une porte OU 33 dont les deux entrées sont reliées aux sorties 2i et 2i+1 de l'étage précédent.

Chaque cellule de données parvenant à une entrée d'un réseau du type illustré sur la figure 2,3 ou 4 comporte un en-tête de L bits au moins, le (j+1)-ième bit b(j) de l'en-tête ($0 \leq j \leq$ L-1) étant destiné à commander la commutation dans les éléments binaires de commutation de la colonne j du réseau Oméga inversé, en acheminant la cellule vers la sortie supérieure SS1 lorsque b(j)=1 et vers la sortie inférieure SS0 lorsque b(j)=0. Cette commutation est obtenue en envoyant aux éléments 15 de la colonne j un signal de cadencement Hg réglé pour permettre de mémoriser le bit b(j) dans la bascule 22 pendant la durée de passage d'une cellule. A priori, il peut donc se produire un conflit dans un élément binaire de commutation 15 si deux cellules parviennent simultanément sur ses deux entrées IN0 et IN1 avec des bits d'acheminement b(j) identiques.

Il est souhaitable de générer les bits d'acheminement b(j) pour les différentes cellules de manière à éviter que de tels conflits apparaissent.

Les réseaux Oméga inversés ont la propriété d'être auto-acheminants. Dans le cas de la figure 2, où N=L, ceci signifie que les bits d'acheminement b(N-1),...,b(1),b(0) inclus dans l'en-tête de chaque cellule et considérés dans l'ordre inverse des colonnes sont la représentation binaire de l'adresse de sortie, c'est-à-dire du numéro de la sortie du réseau Oméga inversé vers laquelle la cellule sera acheminée. Cette propriété d'auto-acheminement est généralisable au cas où L < N et où les L étages du réseau Oméga inversé sont suivis par N-L étages de concentration tels que représentés sur les figures 3 et 4 : les L bits d'acheminement b(L-1),...,b(0) sont alors également la représentation binaire de l'adresse de sortie, c'est-à-dire du numéro de la sortie du réseau global vers laquelle la cellule sera acheminée.

Un algorithme d'acheminement éliminant les conflits dans un réseau de commutation tel que représenté sur la figure 2, 3 ou 4 a été exposé dans le document FR-A-2 678 794. Cet algorithme consiste à attribuer aux cellules libres ou vides une adresse de sortie résultant de la décrémentation d'une première variable de comptage à l'arrivée de chaque cellule libre, et à attribuer aux cellules occupées une adresse de sortie résultant de l'incrémentation d'une seconde variable de comptage à l'arrivée de chaque cellule occupée. Ceci assure un acheminement des cellules libres dans le sens circulaire descendant des sorties, et un acheminement des cellules occupées dans le sens circulaire montant des sorties, sans risque de conflit dans le réseau Oméga inversé. Lorsque L < N, il est possible que plus que $2^L$ cellules parviennent simultanément à l'entrée, ce qui ne provoque pas de conflit dans les L étages du réseau Oméga inversé mais peut provoquer des collisions dans les portes OU des étages de concentration. Pour éviter de telles collisions, l'algorithme prévoit de mettre à zéro les éventuelles cellules en excès de $2^L$. Une telle mise à zéro occasionne la perte de la cellule, mais la probabilité d'une telle perte est en général très faible, comme dans les concentrateurs des commutateurs Knockout (voir "The Knockout switch : a simple, modular architecture for high-performance packet switching", Y.S. Yeh et al, IEEE Journal on Selected Areas in Communications, Vol. SAC-5, N° 8, octobre 1987, pages 1274-1283).

A chaque temps de cellule, l'algorithme ci-dessus implique le calcul de $2^N$ adresses de L bits et leur insertion en-tête des $2^N$ cellules, libres ou occupées, qui sont à adresser simultanément aux $2^N$ entrées du réseau de commutation. Une implémentation logicielle nécessiterait des calculs et des insertions séquentiels qui introduiraient d'importants retards de transmission des cellules. La même difficulté est rencontrée dans le cas d'une implémentation matérielle.

Un but de l'invention est d'associer un réseau de commutation comprenant un réseau Oméga inversé à un générateur de bits d'acheminement qui évite les conflits entre cellules sans retarder excessivement leur transmission.

L'invention propose ainsi un dispositif d'acheminement de cellules de données à mode de transfert asynchrone, comprenant au moins un réseau Oméga inversé à L étages et $2^N$ entrées recevant des cellules synchronisées, L et N étant deux nombres entiers tels que L ≤ N, et un générateur de bits d'acheminement comprenant :

- un registre d'état de $2^N$ bits, ayant un mode de décalage en série et un mode de transfert en parallèle dans lequel il reçoit $2^N$ bits d'état indiquant chacun si la cellule destinée à l'une des $2^N$ entrées du réseau est libre ou occupée ;
- un premier compteur sur L bits incrémenté d'une unité lorsqu'un bit d'état obtenu à partir de la sortie série du registre d'état en mode de décalage en série indique une cellule occupée
- un second compteur sur L bits décrémenté d'une unité lorsque le bit d'état obtenu à partir de la sortie série du registre d'état en mode de décalage en série indique une cellule libre ;
- L registres d'adressage de $2^N$ bits chacun, ayant un mode de décalage en série et un mode de transfert en parallèle, agencés en cascade de façon que le (i+1)-ième registre d'adressage reçoive le contenu du i-ième registre d'adressage en mode de transfert en parallèle pour 1 ≤ i < L ; et
- un multiplexeur ayant L bits de sortie respectivement adressés aux entrées série des L registres d'adressage, une première entrée sur L bits reliée à la sortie du premier compteur sur L bits et sélectionnée lorsque le bit d'état obtenu à partir de la sortie série du registre d'état en mode de décalage en série indique une cellule occupée, et une seconde entrée sur L bits reliée à la sortie du second compteur sur L bits et sélectionnée lorsque le bit d'état obtenu à partir de la sortie série du registre d'état en mode de décalage en série indique une cellule libre,

le dispositif d'acheminement comprenant en outre des moyens d'insertion des bits d'acheminement recevant successivement L ensembles de $2^N$ bits d'adresse depuis le L-ième registre d'adressage en mode de transfert en parallèle, pour insérer en tête de chaque cellule adressée à une entrée du réseau des bits d'acheminement comprenant L bits d'adresse reçus successivement depuis l'un des emplacements du L-ième registre d'adressage en mode de transfert en parallèle.

Le dispositif d'acheminement fonctionne de la façon suivante. Pour chaque groupe de $2^N$ cellules à présenter aux entrées du réseau Oméga inversé, le registre d'état reçoit d'abord en parallèle les $2^N$ bits d'état correspondants. Ensuite, les registres d'état et d'adressage sont mis en mode de décalage en série pour effectuer $2^N$ opérations de décalage pendant lesquelles les adresses des $2^N$ cellules sont successivement calculées par l'un ou l'autre des deux compteurs et chargées bit par bit dans les L registres d'adressage. Une fois que les $2^N$ adresses ont ainsi été chargées, elles sont transférées en parallèle et insérées en tête des cellules correspondantes. L'ensemble de ce processus ne requiert donc que de l'ordre de $1+2^N+L$ cycles d'horloge du générateur de bits d'acheminement. Le générateur garantit en outre l'absence de conflit dans le réseau Oméga inversé.

Lorsque L < N, les L étages du réseau Oméga inversé sont le plus souvent suivis par N-L étages de concentration successifs agencés comme décrit précédemment en référence aux figures 3 et 4. On prévoit alors avantageusement, entre la sortie et l'entrée série du registre d'état, une ligne de rebouclage comportant des moyens de filtrage pour transmettre à l'entrée série du registre d'état le bit d'état fourni par la sortie série du registre d'état en mode de décalage en série tant que le nombre de bits d'état indiquant des cellules occupées qui ont été ainsi transmis depuis la réception en parallèle d'un ensemble de $2^N$ bits d'état par le registre d'état ne dépasse pas $2^L$, et pour transmettre à l'entrée série du registre d'état une valeur de bit d'état représentative d'une cellule libre lorsque ledit nombre de bits d'état a dépassé $2^L$. Le registre d'état est agencé en cascade avec les L registres d'adressage de façon que le premier registre d'adressage reçoive le contenu du registre d'état en mode de transfert en parallèle. Les moyens d'insertion des bits d'acheminement reçoivent ainsi du L-ième registre d'adressage, après les L ensembles de $2^N$ bits d'adresse, les $2^N$ bits d'état filtrés par les moyens de filtrage. On agence les moyens d'insertion pour qu'ils mettent à zéro les bits d'information de toute cellule pour laquelle le bit d'état filtré indique une cellule libre. Ceci empêche les collisions dans les étages de concentration, puisque les cellules occupées en excès de $2^L$ ainsi que toutes les cellules libres sont alors mises à zéro.

Lorsque L=N, la ligne de rebouclage peut relier directement la sortie série du registre d'état à son entrée série, puisqu'aucun débordement de capacité ne peut intervenir dans le réseau Oméga inversé.

Une autre propriété du dispositif d'acheminement selon l'invention est qu'il assure une égalisation de charge en sortie. En d'autres termes, quelle que soit la distribution des cellules occupées sur les $2^N$ lignes d'entrée, les cellules occupées sont statistiquement réparties de manière uniforme sur les $2^L$ sorties du réseau de commutation (L ≤ N).

On peut en outre faire fonctionner le dispositif selon l'invention en multiplexeur $2^N$ par 1. Dans ce cas, les moyens d'insertion des bits d'acheminement sont agencés pour insérer, en tête de chaque cellule et après les L bits d'adresse, le bit d'état filtré (L < N) ou non filtré (L=N) correspondant à cette cellule, et chacune des $2^L$ sorties du réseau de commutation global est reliée à une file d'attente de sortie dans laquelle l'écriture des données d'une cellule n'est effectuée que si le bit d'état inséré en tête de cette cellule indique une cellule occupée. Le multiplexage est obtenu en lisant cycliquement les $2^L$ files d'attente vers la sortie du dispositif. Dans le cas où L < N, un tel multiplexeur $2^N$ par 1 est fonctionnellement semblable à un multiplexeur d'un commutateur de type Knockout. Mais, par rapport au système Knockout, le multiplexeur proposé a l'avantage de nécessiter beaucoup moins de composants logiques.

D'autres particularités et avantages de la présente invention apparaîtront dans la description ci-après d'exemples de réalisation préférés mais non limitatifs, en référence aux dessins annexés, dans lesquels :

- la figure 1, précédemment commentée, est un schéma d'un élément binaire de commutation utilisable dans un réseau Oméga inversé ;

- les figures 2 à 4, précédemment commentées, sont des schémas de trois réseaux de commutation incluant chacun un réseau Oméga inversé ;

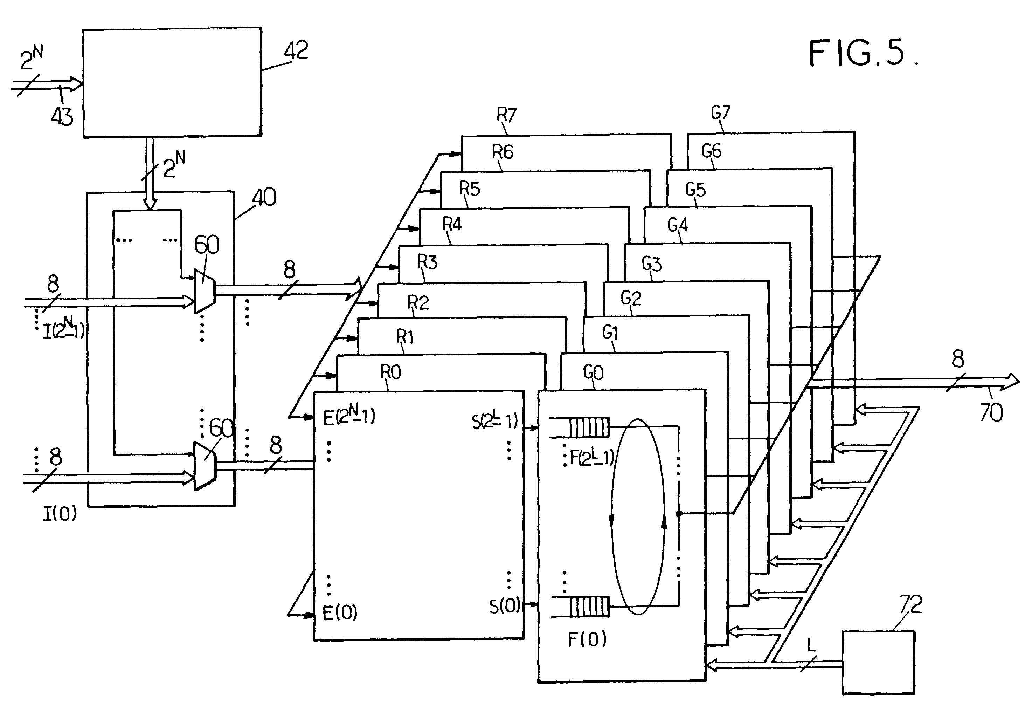

- la figure 5 est un schéma synoptique d'ensemble d'un dispositif d'acheminement selon l'invention fonctionnant en multiplexeur $2^N$ par 1 ;

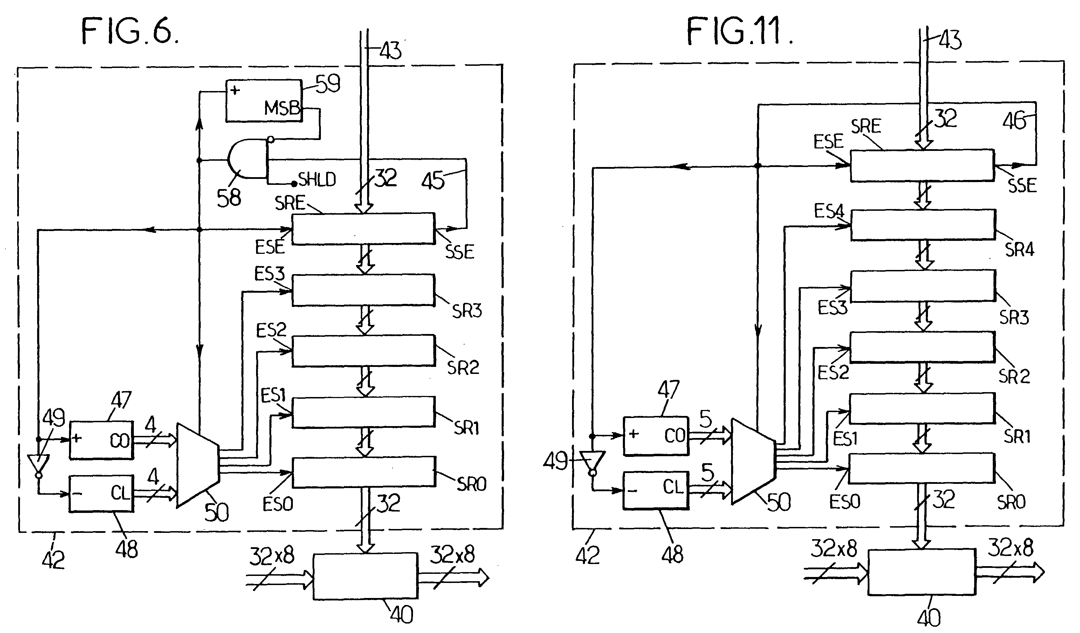

- la figure 6 est un schéma d'un générateur de bits d'acheminement utilisable dans le dispositif de la figure 5 lorsque N=5 et L=4 ;

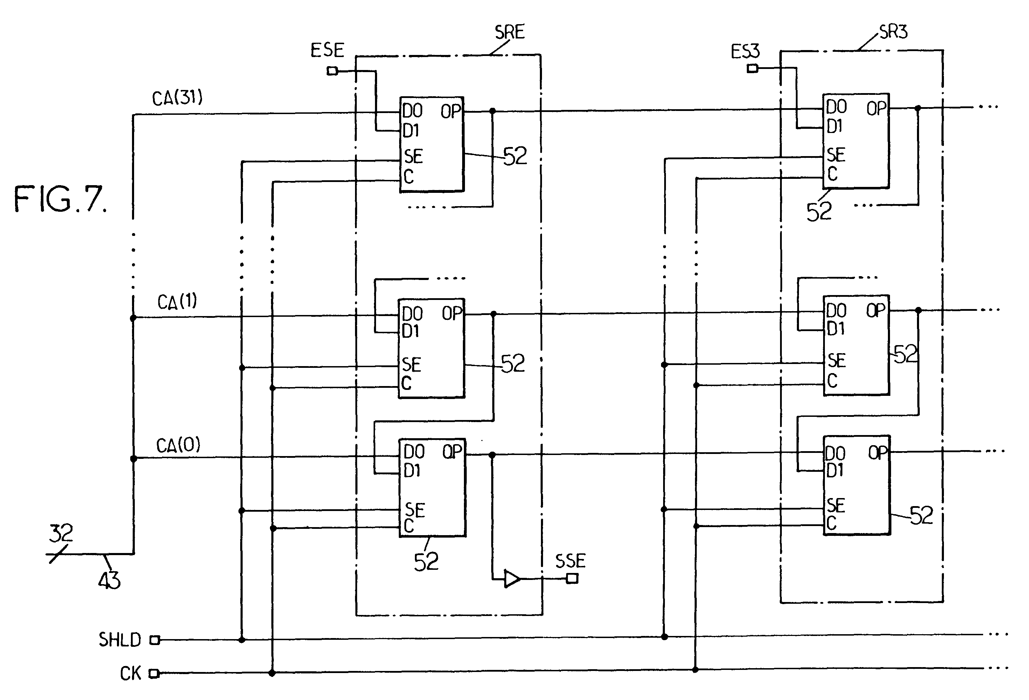

- la figure 7 est un schéma plus détaillé de registres faisant partie du générateur de la figure 6 ;

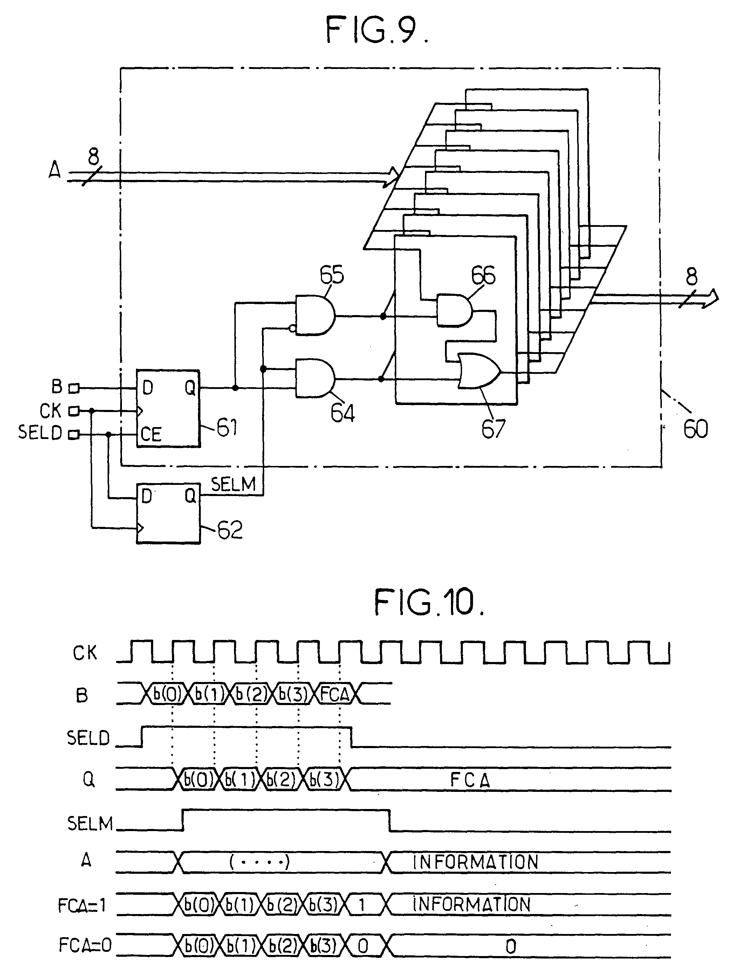

- la figure 8 est un schéma d'un élément de mémorisation d'un bit dans un registre selon la figure 7 ;
- la figure 9 est un schéma d'un multiplexeur des moyens d'insertion des bits d'acheminement dans le dispositif de la figure 5 ;
- la figure 10 montre des chronogrammes expliquant l'insertion des bits d'acheminement en tête des cellules ; et
- la figure 11 est un schéma d'un générateur de bits d'acheminement utilisable dans le dispositif de la figure 5 lorsque N=L=5.

Le dispositif représenté sur la figure 5 traite des ensembles de $2^N$ cellules ATM qui lui parviennent de façon synchronisée sur $2^N$ entrées I(0),..., I($2^N$- 1). Conformément aux recommandations du CCITT, chaque cellule est par exemple constituée de 53 octets de 8 bits. Comme l'illustre la figure 5, huit réseaux de commutation identiques R0 à R7 à $2^N$ entrées E(0),..., E($2^N$-1) et $2^L$ sorties S(0),..., S($2^L$-1) peuvent être prévus pour acheminer en parallèle les huit bits de chaque octet, les huit bits d'un même octet étant adressés à des entrées de même rang des réseau R0 à R7 et étant acheminés vers des sorties de même rang de ces réseaux. Un tel parallélisme, permettant de réduire les vitesses de traitement à débit d'information donné, est optionnel et peut d'ailleurs être implémenté de manière différente.

Les réseaux de commutation R0 à R7 sont par exemple conformes à l'une des figures 2 à 4, avec un réseau Oméga inversé à $2^N$ entrées et L étages suivi, si L < N, par N-L étages de concentration. Un ensemble 40 de $2^N$ multiplexeurs 60 est prévu pour insérer en tête de chaque cellule L+1 bits d'acheminement parmi lesquels les L premiers bits b(0),...,b(L-1) sont utilisés pour commander la commutation dans les colonnes 0,...,L-1 du réseau Oméga inversé. Les L+1 bits d'acheminement sont les mêmes pour chacune des huit voies de traitement parallèles relatives à une même entrée I(0),...,I($2^N$-1) du dispositif. Les bits d'acheminement sont reçus du générateur 42 sous la forme de L+1 ensembles successifs de $2^N$ bits relatifs chacun à l'une des entrées du dispositif.

L'équipement situé en amont délivre, outre les bits d'information des $2^N$ cellules entrantes $2^N$ bits d'état CA(0),...,CA($2^N$-1) indiquant chacun si l'une des cellules présentée à une entrée I(i) (0 ≤ i ≤ $2^N$-1) est libre (CA(i) =0) ou occupée (CA(i)=1). Ces bits d'état sont fournis au générateur de bits d'acheminement 42 sur une entrée parallèle 43 à $2^N$ lignes binaires.

Un générateur de bits d'acheminement 42 utilisable lorsque N=5 et L=4 est représenté sur la figure 6, les réseaux R0 à R7 étant alors conformes à la figure 3. Le générateur 42 comporte L+1=5 registres SRE, SR0 à SR3 de $2^N$=32 bits chacun. Chacun de ces registres a un mode de transfert en parallèle et un mode de décalage en série. Les registres SRE, SR3, SR2, SR1 et SR0 sont agencés en cascade de façon qu'en mode de transfert en parallèle, le (i+1)ième registre d'adressage SR(L-1-i) ($1 \leq i \leq 3$) soit chargé avec le contenu du i-ième registre d'adressage SR(L-i) et que le registre SR3 soit chargé avec le contenu du registre SRE. En mode de transfert en parallèle, le registre SRE est chargé avec les $2^N$ bits d'état CA(0),...,CA($2^N$-1) reçus sur l'entrée parallèle 43, et le contenu du registre SR0 est transmis aux moyens d'insertion 40. En mode de décalage en série, chaque registre reçoit un bit sur son entrée série ESE, ES3, ES2, ES1, ES0 (à gauche sur la figure 6) et décale son contenu d'une position vers la droite. Une ligne de rebouclage 45 relie la sortie série SSE du registre d'état SRE à son entrée série ESE.

La structure des registres à décalage est détaillée sur les figures 7 et 8. Chaque registre se compose de $2^N$=32 éléments de sélection et de mémorisation 52 ayant chacun une entrée parallèle DO, une entrée série D1, une entrée de sélection de mode SE, une entrée d'horloge C et une sortie OP. Toutes les entrées SE reçoivent un signal SHLD de sélection de mode, le mode de décalage en série correspondant à SHLD=1 et le mode de transfert en parallèle à SHLD=0. Les entrées d'horloge C reçoivent toutes un signal CK de cadencement des transferts (horloge bit). Les signaux SHLD et CK sont fournis par une base de temps, non représentée, du dispositif. L'élément 52 (figure 8) comporte une bascule D 54, cadencée par le signal reçu sur l'entrée d'horloge C, dont la sortie Q constitue la sortie OP de l'élément 52. L'entrée D de la bascule 54 est reliée à la sortie d'une porte OU 55 dont les deux entrées sont respectivement reliées aux sorties de deux portes ET 56,57. La porte ET 56 a deux entrées reliées aux entrées D1 et SE de l'élément 52. La porte ET 57 a une entrée reliée à l'entrée DO de l'élément 52 et une entrée inverseuse reliée à l'entrée SE. Ainsi, lorsque SHLD=1, l'entrée série D1 est sélectionnée pour mémoriser un bit dans la bascule 54, tandis que l'entrée parallèle DO est sélectionnée lorsque SHLD=0.

Les entrées parallèles DO du registre d'état SRE sont reliées aux 32 lignes de l'entrée 43 pour recevoir les bits d'état CA(i) en mode de transfert en parallèle (SHLD=0). Pour agencer en cascade deux registres successifs, les sorties OP des éléments 52 du premier registre sont reliées aux entrées parallèles DO des éléments correspondants 52 du second registre. L'entrée série ESE, ES3 d'un registre est constituée par l'entrée série D1 du premier élément 52 de ce registre (par exemple celui correspondant au bit d'état CA(31) comme le montre la figure 7). Ensuite, le i-ième élément 52 du registre ($2 \leq i \leq 32$) a son entrée série D1 reliée à la sortie OP du (i-1)-ième élément 52 de ce même registre. La sortie série SSE du registre d'état SRE est constituée par la sortie OP du dernier élément 52 de ce registre.

La ligne de rebouclage 45 comporte des moyens de filtrage constitués, dans l'exemple représenté sur la figure 6, par une porte ET 58 et un compteur 59 sur L+1=5 bits. La sortie de la porte ET 58 est reliée d'une part à l'entrée série ESE du registre d'état SRE, et d'autre part à l'entrée d'incrémentation du compteur 59. Une entrée de la porte ET 58 est reliée à la sortie série SSE du registre d'état, et ses deux autres entrées reçoivent respectivement le signal de sélection de mode SHLD et le complément logique du bit de poids de plus fort MSB du compteur 59. Avant l'arrivée de chaque ensemble de 32 bits d'état CA(i), le compteur 59 est initialisé à zéro.

Une fois que les $2^N$=32 bits d'état CA(0),...,CA(31) ont été chargés en parallèle dans le registre d'état SRE (SHLD=0), le générateur 42 exécute 32 cycles de décalage en série (SHLD=1) au cours desquels les adresses d'acheminement des cellules sont calculées. Le générateur 42 comprend à cette fin deux compteurs 47,48 sur L=4 bits. Le compteur 47 a une entrée d'incrémentation reliée à la sortie de la porte ET 58, de sorte que sa valeur de comptage CO est incrémentée d'une unité lorsque le bit d'état filtré FCA(i) transmis par la ligne de rebouclage 45 en mode de décalage en série vaut 1 (cellule occupée) . Le compteur 48 a une entrée de décrémentation reliée à la sortie de la porte ET 58 par l'intermédiaire d'un inverseur 49, de sorte que sa valeur de comptage CL est décrémentée d'une unité lorsque le bit d'état filtré FCA(i) transmis par la ligne de rebouclage 45 vaut 0 (cellule libre) . Un multiplexeur 50 a deux entrées sur L=4 bits recevant respectivement les valeurs de comptage CO et CL fournies par les compteurs 47 et 48. Les L=4 bits de sortie du multiplexeur 50 sont respectivement adressés aux entrées série ES0 à ES3 des registres d'adressage SR0 à SR3. La sélection des entrées du multiplexeur 50 s'opère en fonction du bit d'état filtré FCA(i) transmis par la ligne de rebouclage en mode de décalage en série : la valeur CO est sélectionnée lorsque FCA(i)=1 (cellule occupée), et la valeur CL est sélectionnée lorsque FCA(i)=0 (cellule libre). Au démarrage, les compteurs 47 et 48 sont initialisés à des valeurs CO et CL telles que CL=CO-1. Cette condition d'initialisation évite qu'une même adresse puisse être affectée à la fois à une cellule libre et à une cellule occupée dans un ensemble de $2^N$=32 cellules à acheminer simultanément. Pour un ensemble donné de $2^N$=32 bits d'état, tant que le nombre de bits d'état CA(i) qui valent 1 (cellule occupée) ne dépasse pas $2^L$=16, le bit de poids le plus fort MSB du compteur 59 reste à 0 et la ligne de rebouclage 45 transmet simplement le bit d'état : FCA(i)=CA(i). Dès qu'il y a eu plus de 16 cellules occupées, le bit MSB prend la valeur 1 et bloque la porte ET 58. La ligne de rebouclage 45 transmet alors la valeur FCA(i)=0, ce qui limite à $2^L$=16 le nombre de cellules occupées simultanément acheminées.

Les bits d'adresse $b_i(0),...,b_i(3)$ relatifs à la cellule i adressée à l'entrée I(i) du réseau ($0 \leq i \leq 31$) sont introduits respectivement dans les registres d'adressage SR0 à SR3, le bit $b_i(j)$ ($0 \leq j \leq 3$) étant destiné à commander l'acheminement de la cellule i dans la colonne j du réseau Oméga inversé. Considérés dans l'ordre inverse $b_i(3),...,b_i(0)$, ces bits constituent la représentation binaire de l'adresse de sortie de la cellule i. Le mode de comptage par les compteurs 47, 48 et de sélection par le multiplexeur 50 assure l'absence de conflit dans le réseau Oméga inversé.

Après les 32 cycles de décalage en série, les 32 adresses sont présentes dans les registres SR0 à SR3, et les bits d'état filtrés FCA(i) sont présents aux emplacements correspondants dans le registre SRE. Le générateur 42 exécute alors L+1=5 cycles de transfert en parallèle (SHLD=0) pour envoyer successivement aux moyens d'insertion 40 les L=4 ensembles de $2^N$=32 bits d'adresse puis l'ensemble de $2^N$=32 bits d'état filtrés. Le générateur 42 est alors prêt à recevoir et traiter les bits d'état relatifs au prochain ensemble de cellules entrantes.

La figure 9 montre un multiplexeur 60 des moyens d'insertion 40 servant à insérer les bits d'adresse et d'état en tête d'une cellule. Une entrée B est reliée à la sortie de l'emplacement relatif à cette cellule du dernier registre d'adressage SR0 du générateur 42. Les bits d'adresse b(0) à b(3) et le bit d'état filtré FCA sont reçus successivement sur cette entrée comme illustré sur la seconde ligne de la figure 10. L'entrée B du multiplexeur est reliée à l'entrée D d'une bascule D 61 cadencée par l'horloge bit CK et activée par un signal SELD produit par la base de temps de façon que SELD=1 (bascule activée) pendant l'arrivée des bits b(0) à b(3) et FCA (troisième ligne de la figure 10). Le signal SELD revient ensuite à 0 de sorte que le bit FCA reste mémorisé dans la bascule 61 (quatrième ligne de la figure 10). L'insertion est commandée par un signal de sélection SELM correspondant par exemple au signal SELD retardé d'un cycle d'horloge par une bascule D 62 (cinquième ligne de la figure 10) ou produit de manière analogue par la base de temps. Une entrée A sur 8 bits du multiplexeur 60 reçoit les bits d'information provenant d'une des entrées I(i) du dispositif. L'information utile d'une cellule (53 bits par ligne) est formatée de manière à parvenir entre deux impulsions du signal SELM, le flux d'information étant interrompu lorsque SELM=1 comme le montre la sixième ligne de la figure 10. Le multiplexeur 60 comporte une porte ET 64 dont les deux entrées sont respectivement reliées aux sorties Q des bascules 61 et 62. Une autre porte ET 65 a une entrée reliée à la sortie Q de la bascule 61 et une entrée inverseuse reliée à la sortie Q de la bascule 62. Pour chaque ligne binaire relative à l'entrée A, le multiplexeur 60 comporte une porte ET 66 et une porte OU 67 dont une entrée est reliée à la sortie de ladite porte ET 66. L'autre entrée de la porte OU 67 est reliée à la sortie de la porte ET 64. Les entrées de la porte ET 66 sont respectivement reliées à la sortie de la porte ET 65 et à ladite ligne binaire. La sortie sur 8 bits du multiplexeur 60 est constituée par les huit sorties des portes OU 67 qui fournissent les flux binaires adressés à des entrées de même rang des réseaux de commutation R0 à R7.

Les signaux transmis aux entrées de même rang des réseaux R0 à R7 sont illustrés par les deux dernières lignes de la figure 10. Les bits d'acheminement sont insérés en tête de la cellule par l'intermédiaire de la porte ET 64 et des portes OU 67 pendant que SELM=1. Si le bit d'état filtré FCA relatif à la cellule vaut 1 (cellule occupée), les bits d'information de la cellule sont ensuite transmis par l'intermédiaire de la porte ET 65, des portes ET 66 et des portes OU 67 (avant-dernière ligne de la figure 10). Si la cellule est libre ou à libérer (FCA=0), la porte ET 65 reste bloquée pendant la durée du champ d'information, et les bits d'information sont mis à zéro comme l'indique la dernière ligne de la figure 10. Cette mise à zéro élimine les risques de collision dans les étages de concentration des réseaux.

Dans le mode de réalisation illustré sur la figure 5, le dispositif d'acheminement selon l'invention fonctionne en multiplexeur de voies $2^N$ par 1. Chaque réseau de commutation R0,...,R7 est associé à un groupement G0,...,G7 de $2^L$ files d'attente de sortie $F(0),...,F(2^L-1)$. Chaque sortie $S(0),...,S(2^L-1)$ d'un réseau, constituée par une sortie du (N-L)-ième étage de concentration de ce réseau, est reliée à une file d'attente $F(0),...,F(2^L-1)$ constituée par une mémoire de type FIF0. Lorsque le bit d'état filtré FCA relatif à une cellule acheminée vers huit sorties de même rang des réseaux R0 à R7 vaut 1, une écriture des bits d'information qui suivent est commandée dans les huit files d'attente correspondantes. Si FCA=0, aucune écriture n'est effectuée. Ainsi, les écritures dans les files d'attente sont conditionnées par des signaux (les bits d'état filtrés) transmis selon le même chemin que les bits d'information, et automatiquement synchronisés.

La lecture des files d'attente vers la sortie 70 du dispositif s'effectue de façon cyclique sous le contrôle d'un compteur 72 sur L bits. Le compteur 72 est incrémenté d'une unité à chaque temps de réémission de cellule, et délivre une adresse de lecture sur L bits aux groupements G0 à G7 de files d'attente. Cette adresse pointe les files d'attente dans lesquelles doit être lue la cellule à émettre. Les groupements G0 à G7 délivrent huit bits qui sont regroupés pour restituer les octets sur la sortie 70. S'il ne reste pas de cellule occupée en attente dans les groupements G0 à G7, le compteur 72 n'est pas incrémenté et aucune lecture n'est effectuée. Le mode d'acheminement dans les réseaux de commutation et cette gestion des files d'attente préservent sur la sortie l'ordre d'arrivée des cellules occupées.

Le dispositif ci-dessus décrit avec L < N peut fonctionner autrement qu'en multiplexeur $2^N$ par 1. Par exemple, si les files d'attente de sortie sont supprimées, le dispositif constitue un concentrateur $2^N$ par $2^L$ assurant en outre une fonction d'égalisation de charge sur ses $2^L$ sorties (une sortie sur 8 bits est constituée en regroupant les sorties de même rang des réseaux R0 à R7) grâce au mode d'acheminement défini par le générateur 42.

Lorsque L=N, le générateur 42 des bits d'acheminement peut être conforme au schéma de la figure 11, établi pour L=N=5, les réseaux de commutation R0 à R7 étant alors tels que celui de la figure 2. Ce schéma est semblable à celui de la figure 6, avec un registre d'adressage supplémentaire SR4 pour les cinquièmes bits d'adresse b(4), les compteurs 47,48 et le multiplexeur 50 fonctionnant sur 5 bits. Lorsque L=N, la ligne de rebouclage 46 relie directement la sortie série SSE du registre d'état à son entrée série, les moyens de filtrage 58, 59 étant inutiles puisqu'aucun débordement de capacité ne peut survenir dans les réseaux Oméga inversés R0 à R7. Le fonctionnement du dispositif lorsque L=N est identique à celui décrit précédemment. Toutefois, il n'est pas nécessaire de forcer à zéro des cellules en excès puisqu'il n'y a pas d'étage de concentration et puisque les cellules repérées libres (CA=0) ne sont pas enregistrées dans les files d'attente de sortie. En d'autres termes, dans les multiplexeurs 60 des moyens d'insertion (figure 9), on peut se dispenser des portes ET 65 en adressant directement le complément logique du signal SELM aux entrées des portes ET 66.

Si, lorsque L=N, on supprime les groupements G0 à G7 de files d'attentes de sortie, le dispositif fonctionne comme un égaliseur de charges à $2^N$ voies. Dans ce cas, il n'est pas indispensable d'insérer les bits d'état CA en tête des cellules, c'est-à-dire que le registre d'état SRE peut ne pas être agencé en cascade avec les registres d'adressage SR4,...,SR0 (figure 11), que l'entrée série ESE du registre d'état peut ne pas être reliée à sa sortie série SSE, et que les multiplexeurs 60 peuvent être commandés par le signal SELD de manière à insérer seulement les L bits d'adresse en tête de chaque cellule (figures 9 et 10).

**Revendications**

1. Dispositif d'acheminement de cellules de données à mode de transfert asynchrone, comprenant au moins un réseau Oméga inversé (24;25;28) à L étages et $2^N$ entrées recevant des cellules synchronisées, L et N étant deux nombres entiers tels que L $\leq$ N, et un générateur de bits d'acheminement (42), **caractérisé en ce que** le générateur de bits d'acheminement comprend :

   - un registre d'état (SRE) de $2^N$ bits, ayant un mode de décalage en série et un mode de transfert en parallèle dans lequel il reçoit $2^N$ bits d'état (CA(0),...,CA($2^N$-1)) indiquant chacun si la cellule destinée à l'une des $2^N$ entrées du réseau est libre ou occupée ;
   - un premier compteur sur L bits (47) incrémenté d'une unité lorsqu'un bit d'état (FCA;CA) obtenu à partir de la sortie série (SSE) du registre d'état en mode de décalage en série indique une cellule occupée ;
   - un second compteur sur L bits (48) décrémenté d'une unité lorsque le bit d'état (FCA;CA) obtenu à partir de la sortie série (SSE) du registre d'état en mode de décalage en série indique une cellule libre ;
   - L registres d'adressage (SR0,SR1,...) de $2^N$ bits chacun, ayant un mode de décalage en série et un mode de transfert en parallèle, agencés en cascade de façon que le (i+1)-ième registre d'adressage reçoive le contenu du i-ième registre d'adressage en mode de transfert en parallèle pour $1 \leq i < L$ ; et
   - un multiplexeur (50) ayant L bits de sortie respectivement adressés aux entrées série (ES0, ES1,...) des L registres d'adressage, une première entrée sur L bits reliée à la sortie du premier compteur sur L bits (47) et sélectionnée lorsque le bit d'état (FCA;CA) obtenu à partir de la sortie série du registre d'état en mode de décalage en série indique une cellule occupée, et une seconde entrée sur L bits reliée à la sortie du second compteur sur L bits (48) et sélectionnée lorsque le bit d'état (FCA;CA) obtenu à partir de la sortie série du registre d'état en mode de décalage en série indique une cellule libre,

   le dispositif d'acheminement comprenant en outre des moyens (40) d'insertion des bits d'acheminement recevant successivement L ensembles de $2^N$ bits d'adresse depuis le L-ième registre d'adressage (SR0) en mode de transfert en parallèle, pour insérer en tête de chaque cellule adressée à une entrée du réseau des bits d'acheminement comprenant L bits d'adresse (b(0), b(1),...) reçus successivement depuis l'un des emplacements du L-ième registre d'adressage en mode de transfert en parallèle.

2. Dispositif selon la revendication 1, **caractérisé en ce qu'**il fonctionne en multiplexeur $2^N$ par 1 avec L = N, **en ce qu'**une ligne de rebouclage (46) relie directement la sortie série (SSE) du registre d'état (SRE) à son entrée série (ESE), **en ce que** le registre d'état est agencé en cascade avec les N registres d'adressage (SR0 à SR4) de façon que le premier registre d'adressage (SR4) reçoive le contenu du registre d'état en mode de transfert en parallèle, **en ce que** les moyens (40) d'insertion des bits d'acheminement reçoivent les $2^N$ bits d'état depuis le N-ième registre d'adressage (SR0) après les N ensembles de $2^N$ bits d'adresse, et sont agencés pour insérer, en tête de chaque cellule et après les N bits d'adresse, le bit d'état (CA) correspondant à cette cellule, et **en ce que** chacune des $2^N$ sorties (S(0), S(1),...) du réseau Oméga inversé (R0-R7) est reliée à une file d'attente de sortie (F(0), F(1),...) dans laquelle l'écriture des données d'une cellule n'est effectuée que si le bit d'état inséré en tête de cette cellule indique une cellule occupée, les $2^N$ files d'attente étant lues cycliquement vers la sortie (70) du dispositif.

3. Dispositif selon la revendication 1, **caractérisé en ce que** L < N, **en ce que** les L étages du réseau Oméga inversé (25;28) sont suivis par N-L étages de concentration successifs (26;29,30,31), le k-ième étage de concentration comprenant $2^{N-k}$ portes OU à deux entrées (33) respectivement reliées à deux sorties consécutives de l'étage précédent, pour $1 \le k \le N-L$, **en ce qu'**une ligne de rebouclage (45) relie la sortie série (SSE) du registre d'état (SRE) à son entrée série (ESE), cette ligne de rebouclage comportant des moyens de filtrage (58,59) pour transmettre à l'entrée série du registre d'état le bit d'état fourni par la sortie série du registre d'état en mode de décalage en série tant que le nombre de bits d'état indiquant des cellules occupées qui ont été ainsi transmis depuis la réception en parallèle d'un ensemble de $2^N$ bits d'état par le registre d'état ne dépasse pas $2^L$, et pour transmettre à l'entrée série du registre d'état une valeur de bit d'état représentative d'une cellule libre lorsque ledit nombre de bits d'état a dépassé $2^L$, **en ce que** le registre d'état (SRE) est agencé en cascade avec les L registres d'adressage (SR0 à SR3) de façon que le premier registre d'adressage (SR3) reçoive le contenu du registre d'état en mode de transfert en parallèle, et **en ce que** les moyens (40) d'insertion des bits d'acheminement reçoivent du L-ième registre d'adressage (SR0), après les L ensembles de $2^N$ bits d'adresse, les $2^N$ bits d'état filtrés par les moyens de filtrage, et sont agencés pour mettre à zéro les bits d'information de toute cellule pour laquelle le bit d'état filtré (FCA) indique une cellule libre.

4. Dispositif selon la revendication 3, **caractérisé en ce qu'**il fonctionne en multiplexeur $2^N$ par 1, **en ce que** les moyens (40) d'insertion des bits d'acheminement sont agencés pour insérer, en tête de chaque cellule et après les L bits d'adresse, le bit d'état filtré (FCA) correspondant à cette cellule, et **en ce que** chacune des $2^L$ sorties du (N-L)-ième étage de concentration est reliée à une file d'attente de sortie (F(0),...,F($2^L$-1)) dans laquelle l'écriture des données d'une cellule n'est effectuée que si le bit d'état filtré inséré en tête de cette cellule indique une cellule occupée, les $2^L$ files d'attente étant lues cycliquement vers la sortie (70) du dispositif.

**Patentansprüche**

1. Vorrichtung zur Weiterleitung von Datenzellen im Asynchronübertragungsmodus, die mindestens ein umgekehrtes Omega-Netz (24;25;28) mit L Stufen und $2^N$ Eingängen umfasst, das synchronisierte Zellen empfängt, wobei L und N zwei ganze Zahlen wie $L \le N$ sind, sowie einen Weiterleitungsbit-Erzeuger (42), **dadurch gekennzeichnet, dass** der Weiterleitungsbit-Erzeuger umfasst:

- ein Zustandsregister (SRE) mit $2^N$ Bits, das einen seriellen Verschiebungsmodus und einen parallelen Übertragungsmodus umfasst, in dem es $2^N$ Zustandbits (CA(0),...,CA($2^N$-1)) empfängt, die jeweils anzeigen, ob die Zelle, die für einen der $2^N$ Eingänge des Netzes bestimmt ist, frei oder belegt ist;
- einen ersten Zähler für L Bits (47), der um eine Einheit erhöht wird, wenn ein Zustandsbit (FCA;CA), das von dem seriellen Ausgang (SSE) des Zustandsregisters im seriellen Verschiebungsmodus aus erhalten wird, eine belegte Zelle anzeigt;
- einen zweiten Zähler für L Bits (48), der um eine Einheit heruntergezählt wird, wenn das Zustandsbit (FCA;CA), das von dem seriellen Ausgang (SSE) des Zustandsregisters im seriellen Verschiebungsmodus aus erhalten wird, eine freie Zelle anzeigt;
- L Adressierungsregister (SR0, SR1,...) mit jeweils $2^N$ Bits, das einen seriellen Verschiebungsmodus und einen parallelen Übertragungsmodus aufweist, die in Kaskade geschaltet sind, in der Weise, dass das (i+1)-te Adressierungsregister den Inhalt des i-ten Adressierungsregisters im parallelen Übertragungsmodus mit $1 \le i < L$ empfängt; und
- einen Multiplexer (50) mit L Ausgangsbits, die jeweils an die seriellen Eingänge (ES0, ES1,...) der L Adressierungsregister adressiert werden, wobei ein erster Eingang für L Bits an den Ausgang des ersten Zählers für L Bits (47) gelegt und angesteuert wird, wenn das Zustandsbit (FCA;CA), das von dem seriellen Ausgang des Zustandsregisters im seriellen Verschiebungsmodus erhalten wurde, eine belegte Zelle anzeigt, und ein zweiter Eingang für L Bits, der an den Ausgang des zweiten Zählers für L Bits (48) angelegt und angesteuert wird, wenn das Zustandsbit (FCA;CA), das von dem seriellen Ausgang des Zustandsregisters im Serienverschiebungsmodus erhalten wurde, eine freie Zelle anzeigt,

wobei die Weiterleitungsvorrichtung ferner Vorrichtungen (40) zum Einfügen der Weiterleitungsbits umfasst, die nacheinander L Einheiten aus $2^N$

Adressbits von dem L-ten Adressierungsregister (SR0) im parallelen Übertragungsmodus empfangen, um am Anfang jeder Zelle, die an einen Eingang des Netzes adressiert ist, Weiterleitungsbits einzufügen, die L Adressbits (b(0), b(1), ...) umfassen, die nacheinander von einem der Plätze des L-ten Adressierungsregisters im parallelen Übertragungsmodus erhalten wurden.

2. Vorrichtung nach Anspruch 1, **dadurch gekennzeichnet, dass** es als Multiplexer $2^N$ mal 1 funktioniert, wobei L = N, und dass eine Rückschleifleitung (46) den seriellen Ausgang (SSE) des Zustandsregisters (SRE) direkt an dessen seriellen Eingang (ESE) legt, und dass das Zustandsregister mit den N Adressierungsregistern (SR0 bis SR4) in Kaskade geschaltet ist, sodass das erste Adressierungsregister (SR4) den Inhalt des Zustandsregisters im parallelen Übertragungsmodus empfängt, und dass die Vorrichtungen (40) zum Einfügen der Weiterleitungsbits die $2^N$ Zustandsbits von dem N-ten Adressierungsregister (SR0) nach den N Einheiten aus $2^N$ Adressbits empfangen und so vorgesehen sind, dass sie am Anfang jeder Zelle und nach den N Adressbits das dieser Zelle entsprechende Zustandsbit (CA) einfügen, sowie dadurch, dass jeder der $2^N$ Ausgänge (S(0), S(1),...) des umgekehrten Omega-Netzes (R0-R7) an eine Ausgangswarteschlange (F(0), F(1),...) gelegt ist, in welche die Daten einer Zelle nur dann geschrieben werden, wenn das am Anfang dieser Zelle eingefügte Zustandsbit eine belegte Zelle anzeigt, welche $2^N$ Warteschlangen zyklisch zum Ausgang (70) der Vorrichtung hin gelesen werden.

3. Vorrichtung nach Anspruch 1, **dadurch gekennzeichnet, dass** L < N, und dass die L Stufen des des umgekehrten Omega-Netzes (25;28) von N-L aufeinanderfolgenden Konzentrationsstufen (26; 29,30,31) gefolgt sind, wobei die k-te Konzentrationsstufe $2^{N-k}$ ODER-Gates mit zwei Eingängen (33) umfasst, die jeweils an zwei aufeinanderfolgende Ausgänge der vorherigen Stufe gelegt sind, wobei
1 ≤ k ≤ N-L, dass eine Rückschleifleitung (45) den seriellen Ausgang (SSE) des Zustandsregisters (SRE) an dessen seriellen Eingang (ESE) legt, welche Rückschleifleitung Filtermittel (58,59) zur Übertragung des Zustandsbits, das von dem seriellen Ausgang des Zustandsregisters im seriellen Verschiebungsmodus geliefert wurde, an den seriellen Eingang des Zustandsregisters umfasst, solange die Anzahl der Zustandsbits, welche die belegten Zellen anzeigen, die so von dem parallelen Empfang einer Einheit aus $2^N$ Zustandsbits durch das Zustandsregister übertragen wurden, $2^L$ nicht überschreitet, und zur Übertragung eines Zustandsbitwerts, der repräsentativ für eine freie Zelle ist, an den seriellen Eingang des Zustandsregisters, wenn die Anzahl Zustandsbits $2^L$ überschritten hat, und dass das Zustandsregister (SRE) mit den L Adressierungsregistern (SR0 bis SR3) in Kaskade geschaltet ist, sodass das erste Adressierungsregister (SR3) den Inhalt des Zustandsregisters im parallelen Übertragungsmodus empfängt, und dass die Vorrichtungen (40) zum Einfügen der Weiterleitungsbits von dem L-ten Adressierungsregister (SR0) nach den L Einheiten von $2^N$ Adressbits die $2^N$ Zustandsbits empfangen, die von den Filtermitteln gefiltert wurden, und so vorgesehen sind, dass sie die Datenbits jeder Zelle, für die das gefilterte Zustandsbit (FCA) eine freie Zelle anzeigt, auf Null setzt.

4. Vorrichtung nach Anspruch 3, **dadurch gekennzeichnet, dass** sie als Multiplexer $2^N$ mal 1 funktioniert, und dass die Vorrichtungen (40) zum Einfügen der Weiterleitungsbits so vorgesehen sind, dass sie am Anfang jeder Zelle und nach den L Adressbits das gefilterte Zustandsbit (FCA) einfügen, das dieser Zelle entspricht, und dass jeder der $2^L$ Ausgänge der (N-L)-ten Konzentrationsstufe an eine Ausgangswarteschlange (F(0),...,F($2^L$-1)) gelegt ist, in welche die Daten einer Zelle nur dann geschrieben werden, wenn das am Anfang dieser Zelle eingefügte gefilterte Zustandsbit eine belegte Zelle anzeigt, welche $2^L$ Warteschlangen zyklisch zum Ausgang (70) der Vorrichtung hin gelesen werden.

**Claims**

1. Asynchronous transfer mode data cell routing device comprising at least one reverse Omega network (24;25;28) with L stages and $2^N$ inputs receiving synchronized cells, L and N being two integers such that L ≤ N, and a routing bits generator (42), **characterized in that** the routing bits generator comprises:

   - a state register (SRE) of $2^N$ bits, having a serial shift mode and a parallel transfer mode in which it receives $2^N$ state bits (CA(0),...,CA($2^N$-1)) each indicating whether the cell destined for one of the $2^N$ inputs of the network is free or occupied;
   - a first counter on L bits (47), incremented by one unit when a state bit (FCA;CA) obtained from the serial output (SSE) of the state register in serial shift mode indicates an occupied cell;
   - a second counter on L bits (48), decremented by one unit when the state bit (FCA;CA) obtained from the serial output (SSE) of the state register in serial shift mode indicates a free cell;
   - L addressing registers (SR0,SR1,...) of $2^N$ bits each, having a serial shift mode and a parallel transfer mode, cascaded so that the (i+1)-th addressing register receives the contents of the i-th addressing register in parallel transfer mode for $1 \leq i < L$; and

- a multiplexer (50) having L output bits addressed respectively to the serial inputs (ES0, ES1, ...) of the L addressing registers, a first L-bit input connected to the output of the first counter on L bits (47) and selected when the state bit (FCA;CA) obtained from the serial output of the state register in serial shift mode indicates an occupied cell, and a second L-bit input connected to the output of the second counter on L bits (48) and selected when the state bit (FCA;CA) obtained from the serial output of the state register in serial shift mode indicates a free cell,

the routing device further comprising routing bits insertion means (40) successively receiving L sets of $2^N$ address bits from the L-th addressing register (SR0) in parallel transfer mode, in order to insert at the head of each cell addressed to an input of the network routing bits comprising L address bits (b(0), b(1),...) received in succession from one of the locations of the L-th addressing register in parallel transfer mode.

2. Device according to Claim 1, **characterized in that** it operates as a $2^N$ by 1 multiplexer with L = N, **in that** a feedback line (46) connects the serial output (SSE) of the state register (SRE) directly to its serial input (ESE), **in that** the state register is cascaded with the N addressing registers (SR0 to SR4) in such a way that the first addressing register (SR4) receives the contents of the state register in parallel transfer mode, **in that** the routing bits insertion means (40) receive the $2^N$ state bits from the N-th addressing register (SR0) after the N sets of $2^N$ address bits, and are arranged in order to insert, at the head of each cell and after the N address bits, the state bit (CA) corresponding to this cell, and **in that** each of the $2^N$ outputs (S(0), S(1),...) of the reverse Omega network (R0-R7) is connected to an output queue (F(0), F(1),...) into which the writing of the data of a cell is performed only if the state bit inserted at the head of this cell indicates an occupied cell, the $2^N$ queues being read out cyclically to the output (70) of the device.

3. Device according to Claim 1, **characterized in that** L < N, **in that** the L stages of the reverse Omega network (25;28) are followed by N-L successive concentration stages (26;29,30,31), the k-th concentration stage comprising $2^{N-k}$ OR gates with two inputs (33) connected respectively to two consecutive outputs of the preceding stage, for $1 \leq k < N-L$,

**in that** a feedback line (45) connects the serial output (SSE) of the state register (SRE) to its serial input (ESE), said feedback line including filtering means (58,59) for transmitting to the serial input of the state register the state bit provided by the serial output of the state register in serial shift mode as long as the number of state bits indicating occupied cells which have been thus transmitted since the reception in parallel of a set of $2^N$ state bits by the state register does not exceed $2^L$, and for transmitting to the serial input of the state register a state bit value representative of a free cell when said number of state bits has exceeded $2^L$, **in that** the state register (SRE) is cascaded with the L addressing registers (SR0 to SR3) in such a way that the first addressing register (SR3) receives the contents of the state register in parallel transfer mode, and **in that** the routing bits insertion means (40) receive from the L-th addressing register (SR0), after the L sets of the $2^N$ address bits, the $2^N$ state bits filtered by the filtering means, and are arranged so as to set to zero the information bits of any cell for which the filtered state bit (FCA) indicates a free cell.

4. Device according to Claim 3, **characterized in that** it operates as a $2^N$ by 1 multiplexer, **in that** the routing bits insertion means (40) are arranged in order to insert, at the head of each cell and after the L address bits, the filtered state bit (FCA) corresponding to this cell, and **in that** each of the $2^L$ outputs of the (N-L)-th concentration stage is connected to an output queue (F(0),...,F($2^L$-1)) into which the writing of the data of a cell is performed only if the filtered state bit inserted at the head of this cell indicates an occupied cell, the $2^L$ queues being read out cyclically to the output (70) of the device.

FIG.1.

FIG.8.

FIG.2 .

EP 0 689 319 B1

FIG.3.

FIG.4.

EP 0 689 319 B1

FIG.5.

FIG.6.

FIG.11.

EP 0 689 319 B1

FIG.7.

SR3, ES3, SRE, ESE, SSE, SR3, 52, OP, D0, D1, SE, C, CA(31), CA(1), CA(0), 32, 43, SHLD, CK

# FIG.9.

# FIG.10.